# EUROPÄISCHE PATENTSCHRIFT

(11) **EP 3 794 769 B1**
(45) Veröffentlichungstag und Bekanntmachung des Hinweises auf die Patenterteilung: **25.12.2024**
(21) Anmeldenummer: 19729618.9
(22) Anmeldetag: 20.05.2019
(51) Int. Cl.: H04L 9/32, G06F 21/64, H04L 9/40

(54) **ÄNDERUNG DES INHALTS EINES WURZELZERTIFIKATSSPEICHERS**
MODIFYING THE CONTENTS OF A ROOT CERTIFICATE STORAGE
MODIFICATION DU CONTENU D'UNE MÉMOIRE POUR DES CERTIFICATS RACINES

(30) Priorität: 24.05.2018 DE 102018208201
(43) Veröffentlichungstag der Anmeldung: 24.03.2021
(73) Patentinhaber: Siemens Mobility GmbH, 81739 München (DE)
(72) Erfinder: BOTH, Thomas, 39114 Magdeburg (DE); LÖFFLER, Philipp, 38173 Klein Veltheim (DE)
(74) Vertreter: Siemens Patent Attorneys
(86) Internationale Anmeldenummer: PCT/EP2019/062899
(87) Internationale Veröffentlichungsnummer: WO 2019/224131

(56) Entgegenhaltungen:
- DE-A1- 102016 204 630
- US-A1- 2006 256 967
- US-B1- 6 513 116
- US-B1- 6 816 900
- US-B2- 9 621 356

## Beschreibung

Die Erfindung bezieht sich auf ein Verfahren zum Betreiben eines einen Zertifikatsspeicher aufweisenden technischen Geräts in Form einer streckenseitigen oder fahrzeugseitigen Komponente einer eisenbahntechnischen Einrichtung. Ein derartiges Verfahren ist aus der deutschen Offenlegungsschrift DE 10 2016 204 630 A1 bekannt.

Die Druckschrift US 6,816,900 B1 offenbart ein Verfahren zum Aktualisieren eines Wurzelzertifikatsspeichers mit Blick auf eine Identitätsprüfung des Webseitenanbieters beim Kommunizieren mit fremden Webseiten.

Die Druckschrift US 9,621,356 B2 offenbart ein Verfahren zum Widerrufen abgespeicherter Zertifikate. Bei dem Verfahren werden zwei Unterschriften herangezogen, um einen Widerruf eines Zertifikats, das sich selbst bestätigt und nicht extern aus anderer Quelle bestätigt werden kann, zu widerrufen.

Der Erfindung liegt die Aufgabe zugrunde, ein Verfahren zum Betreiben einer streckenseitigen oder fahrzeugseitigen Komponente einer eisenbahntechnischen Einrichtung anzugeben, das mit Blick auf eine Änderung von Software oder Dateien besonders manipulationssicher ist.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass der Zertifikatsspeicher ein Wurzelzertifikatsspeicher ist, in dem als gültig angesehene Wurzelzertifikate gespeichert werden, anhand derer das Gerät prüfen kann, ob neu übertragene oder neu installierte Software oder neu empfangene Dateien als vertrauenswürdig einzustufen sind und genutzt bzw. ausgeführt werden dürfen, wobei zum Verändern des Inhalts des Wurzelzertifikatsspeichers derart vorgegangen wird, dass bedienerseitig ein Datencontainer erzeugt wird, der zumindest Folgendes enthält: einen Befehl zum Verändern des Inhalts des Wurzelzertifikatsspeichers sowie im Falle eines Hinzufügens eines neuen Wurzelzertifikats zu dem Wurzelzertifikatsspeicher das jeweilige Wurzelzertifikat, ein einen öffentlichen Schlüssel enthaltendes, bedienerseitiges Signaturzertifikat, einen Vertrauenskettendatensatz, der auf ein Basiswurzelzertifikat verweist und eine Verifizierung des bedienerseitigen Signaturzertifikats ermöglicht und eine mit einem privaten Schlüssel des bedienerseitigen Signaturzertifikats erzeugte Signatur, geräteseitig die Signatur auf Vertrauenswürdigkeit geprüft wird, und zwar auf der Basis des öffentlichen Schlüssels im bedienerseitigen Signaturzertifikat, des Vertrauenskettendatensatzes und zumindest eines geräteseitig abgespeicherten und geräteseitig als vertrauenswürdig angesehenen Basiswurzelzertifikats, und im Falle einer die Vertrauenswürdigkeit bestätigenden Signaturprüfung geräteseitig der im Datencontainer enthaltene Befehl zum Verändern des Inhalts des Wurzelzertifikatsspeichers durchgeführt wird.

Ein wesentlicher Vorteil des erfindungsgemäßen Verfahrens besteht darin, dass ein Zugriff auf den Wurzelzertifikatsspeicher geräteseitig nur erfolgt, wenn ein Datencontainer eingespeist oder übermittelt wird, der anhand eines Vertrauenskettendatensatzes und eines geräteseitig bekannten Basiswurzelzertifikats eine Überprüfung einer ebenfalls im Datencontainer enthaltenen Signatur ermöglicht. Durch das Verwenden des erfindungsgemäß vorgesehenen Datencontainers mit dem beschriebenen Inhalt wird vermieden, dass Bedienpersonal, das zwar berechtigt ist, technische Veränderungen am technischen Gerät vorzunehmen, auch einen Zugriff auf den Wurzelzertifikatsspeicher des Geräts erlangen und diesen manipulieren kann. Eine Veränderung des Wurzelzertifikatsspeichers ist nur möglich, wenn ein Datencontainer erstellt worden ist, der ein überprüfbares vertrauenswürdiges bedienerseitiges Signaturzertifikat aufweist. Nur solche Datencontainer, die die genannten Bedingungen erfüllen, werden berücksichtigt. Die Datencontainer können aufgrund der Überprüfbarkeit ihrer Authentizität beispielsweise über unsichere Datenübertragungsleitungen übertragen werden oder vor Ort von selbst nicht zur Erstellung von Datencontainern autorisiertem Personal implementiert werden.

Vorteilhaft ist es, wenn bedienerseitig ein Datencontainer erzeugt wird, der außerdem eine oder mehrere der folgenden Angaben enthält: eine die zeitliche Gültigkeit des Datencontainers angebende Gültigkeitsangabe, eine die Verwendung des neuen Wurzelzertifikats im Falle eines Hinzufügens eines neuen Wurzelzertifikats angebende Verwendungsangabe, eine die Zugehörigkeit des Datencontainers zum angesprochenen technischen Gerät angebende Zugehörigkeitsangabe und/oder eine Angabe (Applikationsangabe) einer oder mehrerer Applikationen des technischen Geräts, die im Falle eines Hinzufügens eines neuen Wurzelzertifikats das neue Wurzelzertifikat nutzen können sollen.

Als Datencontainer wird vorzugsweise ein Datencontainer mit einem Kopfabschnitt, einem Nutzlastabschnitt und einem Signaturabschnitt, der die Signatur enthält, erzeugt.

Bei der letztgenannten Variante werden der Vertrauenskettendatensatz und das bedienerseitige Signaturzertifikat vorzugsweise in dem Kopfabschnitt untergebracht.

Der Befehl zum Verändern des Inhalts des Wurzelzertifikatsspeichers sowie im Falle eines Hinzufügens eines neuen Wurzelzertifikats zu dem Wurzelzertifikatsspeicher das jeweilige Wurzelzertifikat werden vorzugsweise in dem Nutzlastabschnitt untergebracht.

Die Gültigkeitsangabe und die Verwendungsangabe des Wurzelzertifikats im Falle eines Hinzufügens eines neuen Wurzelzertifikats, die Zugehörigkeitsangabe zum angesprochenen technischen Gerät und/oder die Applikationsangabe einer oder mehrerer Applikationen des technischen Geräts, die im Falle eines Hinzufügens eines neuen Wurzelzertifikats das neue Wurzelzertifikat nutzen können sollen, werden vorzugsweise in dem Kopfabschnitt untergebracht.

Die Signatur wird vorzugsweise über dem Inhalt des Kopfabschnitts und des Nutzdatenabschnitts gebildet.

Als Signatur wird vorzugsweise eine Signatur des Typs RFC7515 erzeugt.

Besonders bevorzugt wird als Signatur eine JSON Web Signatur erzeugt.

Besonders bevorzugt wird das Verfahren bei folgenden eisenbahntechnischen Komponenten eingesetzt: Achszähler, Gleisfreimeldeeinrichtungen, Kommunikationseinrichtungen, Mobilfunkeinrichtungen und/oder Stellwerken.

Die Erfindung bezieht sich darüber hinaus auf ein eisenbahntechnisches Gerät, das eine streckenseitige oder fahrzeugseitige Komponente einer eisenbahntechnischen Einrichtung ist und mit einem Zertifikatsspeicher ausgestattet ist.

Erfindungsgemäß ist vorgesehen, dass der Zertifikatsspeicher ein Wurzelzertifikatsspeicher ist, in dem als gültig angesehene Wurzelzertifikate gespeichert sind, anhand derer die Komponente prüfen kann, ob neu übertragene oder neu installierte Software oder neu empfangene Dateien als vertrauenswürdig einzustufen sind und genutzt bzw. ausgeführt werden dürfen, und die Komponente eine Prüfeinrichtung aufweist, die einen Datencontainer verarbeiten kann, der zumindest Folgendes enthält: einen Befehl zum Verändern des Inhalts des Wurzelzertifikatsspeichers sowie im Falle eines Hinzufügens eines neuen Wurzelzertifikats zu dem Wurzelzertifikatsspeicher das jeweilige Wurzelzertifikat, ein einen öffentlichen Schlüssel enthaltendes, bedienerseitiges Signaturzertifikat, einen Vertrauenskettendatensatz, der auf ein Basiswurzelzertifikat verweist und eine Verifizierung des bedienerseitiges Signaturzertifikats ermöglicht und eine mit einem privaten Schlüssel des bedienerseitigen Signaturzertifikats erzeugte Signatur, und die Prüfeinrichtung derart ausgestaltet ist, dass sie die Signatur auf Vertrauenswürdigkeit prüft, und zwar auf der Basis des öffentlichen Schlüssels im bedienerseitigen Signaturzertifikat, des Vertrauenskettendatensatzes und zumindest eines geräteseitig abgespeicherten und als vertrauenswürdig angesehenen Basiswurzelzertifikats und im Falle einer die Vertrauenswürdigkeit bestätigenden Signaturprüfung den im Datencontainer enthaltenen Befehl zum Verändern des Inhalts des Wurzelzertifikatsspeichers zur Ausführung freigibt oder selbst ausführt.

Bezüglich der Vorteile des erfindungsgemäßen technischen Geräts sei auf die obigen Ausführungen im Zusammenhang mit dem erfindungsgemäßen technischen Verfahren verwiesen.

Die Erfindung wird nachfolgend anhand von Ausführungsbeispielen näher erläutert; dabei zeigen beispielhaft
- Figur 1: eine Anordnung mit einem Ausführungsbeispiel für ein erfindungsgemäßes technisches Gerät und einer an das technische Gerät angeschlossenen Parametriereinrichtung, und zwar in einer ersten Phase eines Verfahrens zum Verändern des Inhalts eines Wurzelzertifikatsspeichers des technischen Geräts,
- Figur 2: die Anordnung gemäß Figur 1 in einer zweiten Phase des Verfahrens zum Verändern des Inhalts des Wurzelzertifikatsspeichers,
- Figur 3: ein Ausführungsbeispiel für einen erfindungsgemäßen Datencontainer, mit dem eine Veränderung des Inhalts des Wurzelzertifikatsspeichers bei dem technischen Gerät gemäß den Figuren 1 und 2 durchgeführt werden kann,
- Fig.4-7: weitere Ausführungsbeispiele für Datencontainer zum Verändern des Inhalts des Wurzelzertifikatsspeichers des technischen Geräts gemäß den Figuren 1 und 2,
- Figur 8: ein Ausführungsbeispiel für eine Prüfeinrichtung, die bei dem technischen Gerät gemäß den Figuren 1 und 2 eingesetzt werden kann, und
- Figur 9: ein weiteres Ausführungsbeispiel für eine Prüfeinrichtung, die bei dem technischen Gerät gemäß den Figuren 1 und 2 eingesetzt werden kann.

In den Figuren werden der Übersicht halber für identische oder vergleichbare Komponenten stets dieselben Bezugszeichen verwendet.

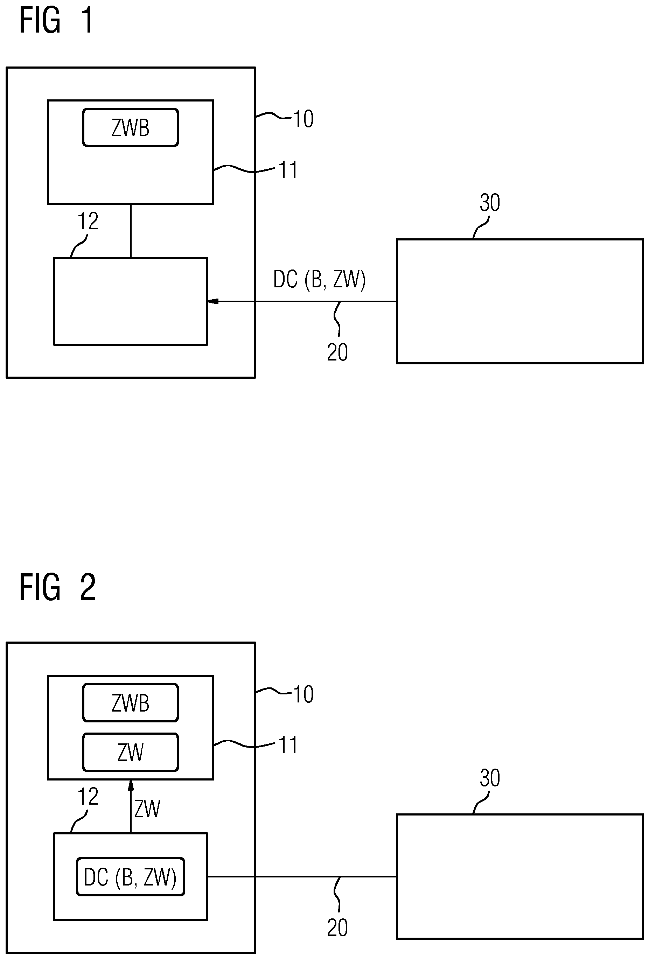

Die Figur 1 zeigt ein technisches Gerät 10, das über eine Datenübertragungsleitung 20 mit einer externen Parametriereinrichtung 30 in Verbindung steht. Bei der Datenübertragungsleitung 20 kann sich um eine nicht sichere Datenübertragungsleitung handeln, also eine solche, die unter Umständen manipuliert werden könnte.

Das technische Gerät 10 umfasst einen Wurzelzertifikatsspeicher 11 sowie eine Prüfeinrichtung 12. Die externe Parametriereinrichtung 30 ermöglicht eine externe Veränderung des Inhalts des Wurzelzertifikatsspeichers 11 unter Mitwirkung der Prüfeinrichtung 12 über die Datenübertragungsleitung 20.

Bei dem Ausführungsbeispiel gemäß Figur 1 wird beispielhaft davon ausgegangen, dass mit der externen Parametriereinrichtung 30 ein neues Wurzelzertifikat ZW zu dem Wurzelzertifikatsspeicher 11 des technischen Geräts 10 hinzugefügt bzw. darin gespeichert werden soll. Ein entsprechender Befehl B zum Verändern des Inhalts des Wurzelzertifikatsspeichers 11, hier also der Befehl B zum Hinzufügen des neuen Wurzelzertifikats ZW, wird in einem Datencontainer DC untergebracht, der nach Fertigstellung über die Datenübertragungsleitung 20 zur Prüfeinrichtung 12 übertragen wird.

Der Datencontainer DC enthält neben dem Wurzelzertifikat ZW und dem Befehl B zum Verändern des Inhalts des Wurzelzertifikatsspeichers 11 zusätzlich einen Vertrauenskettendatensatz VDS und ein bedienerseitiges Signaturzertifikat Z, das einen öffentlichen Schlüssel OS eines zur Erzeugung des Datencontainers DC berechtigten Bedieners enthält. Unter dem Begriff "Bediener" sind hier nicht nur menschliche Bedienpersonen zu verstehen, sondern auch autark agierende Bedienmaschinen wie beispielsweise entsprechend programmierte Computer.

Der Vertrauenskettendatensatz VDS verweist auf ein Basiswurzelzertifikat ZWB und ermöglicht eine Verifizierung des bedienerseitigen Signaturzertifikats 2.

Darüber hinaus enthält der Datencontainer DC eine Signatur SIG(PS(Z)), die mit einem privaten Schlüssel PS des bedienerseitigen Signaturzertifikats 2 erzeugt worden ist.

Die Prüfeinrichtung 12 des Geräts 10 prüft die Vertrauenswürdigkeit des Datencontainers DC, indem sie in einem ersten Schritt auf der Basis des öffentlichen Schlüssels OS im bedienerseitigen Signaturzertifikat Z, des Vertrauenskettendatensatzes VDS und eines in dem Wurzelzertifikatsspeicher 11 abgespeicherten Basiswurzelzertifikats ZWB überprüft, ob die Signatur SIG(PS(Z)) auf einem vertrauenswürdigen Basiswurzelzertifikat ZWB beruht und somit von einem als vertrauenswürdig angesehenen Bediener erzeugt worden ist.

Die Figur 2 zeigt die Anordnung gemäß Figur 1, nachdem die Prüfeinrichtung 12 die Vertrauenswürdigkeit des Datencontainers DC festgestellt hat und sich somit in berechtigter Weise angewiesen ansieht, den Befehl B zum Verändern des Inhalts des Wurzelzertifikatsspeichers 11 auszuführen und das im Datencontainer DC enthaltene Wurzelzertifikat ZW im Wurzelzertifikatsspeicher 11 abzuspeichern.

Bei dem Ausführungsbeispiel gemäß den Figuren 1 und 2 wird beispielhaft davon ausgegangen, dass ein neues Wurzelzertifikat ZW im Wurzelzertifikatsspeicher 11 abgespeichert werden soll und der Befehl B eine entsprechende Aufforderung zur Ergänzung des Wurzelzertifikatsspeichers 11 umfasst. Alternativ kann der Befehl B auch das Löschen eines bereits im Wurzelzertifikatsspeicher 11 abgespeicherten Wurzelzertifikats oder eine sonstige Veränderung des Wurzelzertifikatsspeichers 11 betreffen; auch in diesem Fall beschreibt der Befehl B jeweils die entsprechend gewünschte Veränderung.

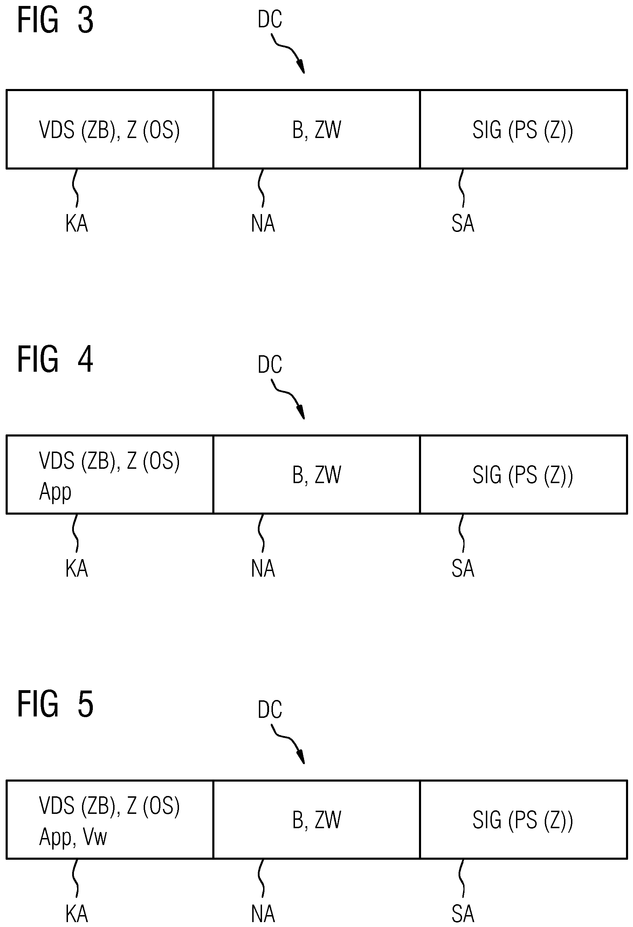

Die Figur 3 zeigt ein erstes Ausführungsbeispiel für einen vorteilhaften Aufbau des Datencontainers DC gemäß den Figuren 1 und 2. Bei dem Ausführungsbeispiel gemäß Figur 3 weist der Datencontainer DC drei Abschnitte auf, nämlich einen Kopfabschnitt KA, einen Nutzlastabschnitt NA und einen Signaturabschnitt SA.

In dem Kopfabschnitt KA sind vorzugsweise der Vertrauenskettendatensatz VDS und das bedienerseitige Signaturzertifikat 2 abgespeichert, das den öffentlichen Schlüssel OS des Bedieners enthält.

In dem Nutzlastabschnitt NA befindet sich vorzugsweise der Befehl B zur Veränderung des Inhalts des Wurzelzertifikatsspeichers 11 sowie das Wurzelzertifikat ZW, das betroffen ist.

In dem Signaturabschnitt SA befindet sich die bereits erläuterte Signatur SIG(PS(Z)), die auf der Basis des Vertrauenskettendatensatzes VDS, des im Wurzelzertifikatsspeicher 11 abgespeicherten Basiswurzelzertifikats ZWB und des öffentlichen Schlüssels OS im Signaturzertifikat 2 eine Überprüfung der Vertrauenswürdigkeit des Datencontainers DC ermöglicht. Die Signatur SIG(PS(Z)) wird vorzugsweise über dem Inhalt des Kopfabschnitts KA und des Nutzdatenabschnitts NA gebildet.

Als Signatur wird vorzugsweise eine Signatur des Typs RFC7515, insbesondere eine JSON Web Signatur, erzeugt.

Die Figur 4 zeigt ein zweites Ausführungsbeispiel für eine vorteilhafte Ausgestaltung eines Datencontainers DC, der zur Veränderung des Inhalts des Wurzelzertifikatsspeichers 11 bei dem technischen Gerät 10 gemäß den Figuren 1 und 2 eingesetzt werden kann. Im Unterschied zu dem Ausführungsbeispiel gemäß Figur 3 weist der Datencontainer DC gemäß Figur 4 zusätzlich eine Applikationsangabe App auf, die eine oder mehrere Applikationen des technischen Geräts 10 definiert, die im Falle eines Hinzufügens eines neuen Wurzelzertifikats ZW das neue Wurzelzertifikat nutzen können sollen.

Die Figur 5 zeigt ein drittes Ausführungsbeispiel für eine vorteilhafte Ausgestaltung eines Datencontainers DC, der zur Veränderung des Inhalts des Wurzelzertifikatsspeichers 11 bei dem technischen Gerät 10 gemäß den Figuren 1 und 2 eingesetzt werden kann. Im Unterschied zu den Ausführungsbeispielen gemäß Figur 3 und 4 weist der Datencontainer DC gemäß Figur 5 zusätzlich eine Verwendungsangabe Vw auf, die die Verwendung eines neuen Wurzelzertifikats ZW angibt. Beispielsweise kann die Verwendungsangabe anzeigen, dass das neue Wurzelzertifikat ZW zur Überprüfung der Authentizität neu eingespielter Softwaremodule verwendet werden soll.

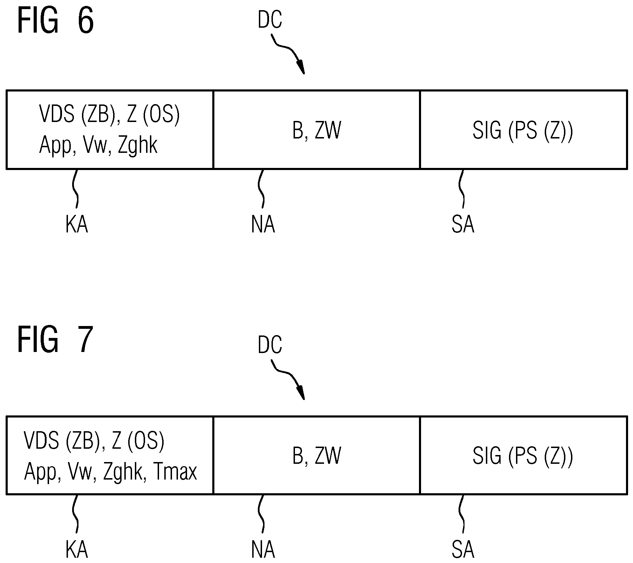

Die Figur 6 zeigt ein viertes Ausführungsbeispiel für eine vorteilhafte Ausgestaltung eines Datencontainers DC, der zur Veränderung des Inhalts des Wurzelzertifikatsspeichers 11 bei dem technischen Gerät 10 gemäß den Figuren 1 und 2 eingesetzt werden kann. Im Unterschied zu den Ausführungsbeispielen gemäß den Figuren 3 bis 5 weist der Datencontainer DC gemäß Figur 6 zusätzlich eine Zugehörigkeitsangabe Zghk auf, die die Zugehörigkeit des Datencontainers DC zum technischen Gerät 10 bestätigt.

Die Figur 7 zeigt ein fünftes Ausführungsbeispiel für eine vorteilhafte Ausgestaltung eines Datencontainers DC, der zur Veränderung des Inhalts des Wurzelzertifikatsspeichers 11 bei dem technischen Gerät 10 gemäß den Figuren 1 und 2 eingesetzt werden kann. Im Unterschied zu den Ausführungsbeispielen gemäß den Figuren 3 bis 6 weist der Datencontainer DC gemäß Figur 7 zusätzlich eine Gültigkeitsangabe Tmax auf, die eine zeitliche Gültigkeit des Datencontainers DC angibt und somit eine zeitliche Begrenzung der Verwertbarkeit des Datencontainers DC ermöglicht, so dass nach Ablauf der Gültigkeitsdauer die Verwertung des Datencontainers DC automatisch gesperrt wird.

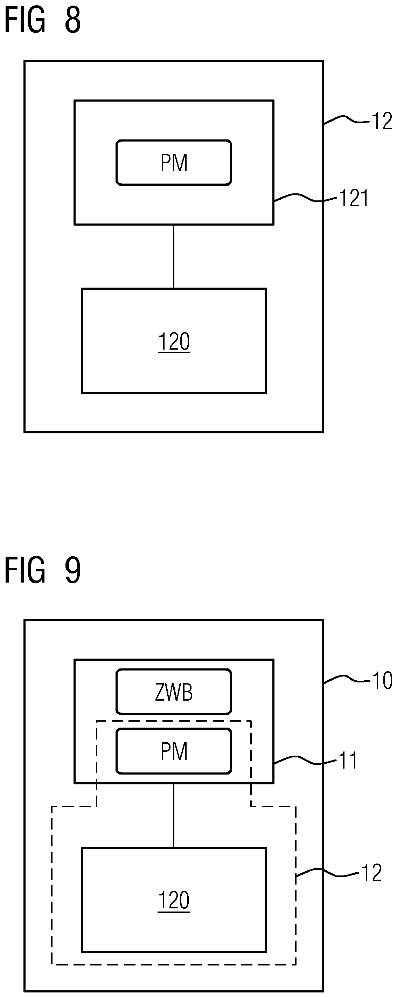

Die Figur 8 zeigt ein Ausführungsbeispiel für eine Prüfeinrichtung 12, die bei dem technischen Gerät 10 gemäß den Figuren 1 und 2 eingesetzt werden kann. Die Prüfeinrichtung 12 umfasst einen Rechner 120 und einen Speicher 121. In dem Speicher 121 ist ein Prüfprogramm PM abgespeichert, das bei Ausführung durch den Rechner 120 den Rechner dazu befähigt, als Prüfeinrichtung 12 zu arbeiten, wie dies oben im Zusammenhang mit den Figuren 1 bis 7 bereits erläutert worden ist.

Die Figur 9 zeigt ein weiteres Ausführungsbeispiel für eine Prüfeinrichtung 12, die bei dem technischen Gerät 10 gemäß den Figuren 1 und 2 eingesetzt werden kann. Die Prüfeinrichtung 12 wird bei dem Ausführungsbeispiel gemäß Figur 9 lediglich durch einen Rechner 120 gebildet, der - programmiert durch ein Prüfprogramm PM, das im Wurzelzertifikatsspeicher 11 abgespeichert ist - dazu in die Lage versetzt wird, das im Zusammenhang mit den Figuren 1 und 2 beschriebene Prüfverfahren auszuführen, also empfangene Datencontainer DC auf Vertrauenswürdigkeit zu prüfen und ggf. darin enthaltene Befehle B zum Verändern des Inhalts des Wurzelzertifikatsspeichers 11 auszuführen.

Der mit der Parametriereinrichtung 30 gebildete Datencontainer DC muss im Übrigen nicht über eine Datenleitung 30 oder sofort nach dessen Erzeugung in das technische Gerät 10 eingespeist werden. Alternativ kann er zunächst zwischengespeichert und zu einem späteren Zeitpunkt vor Ort von Bedienpersonal an einer geräteseitigen Schnittstelle eingespeist werden.

Bei der letztgenannten Variante ist eine zweistufige Sicherheitsüberprüfung möglich: Zunächst kann geprüft werden, ob das Bedienpersonal überhaupt berechtigt ist, an dem technischen Gerät 10 Veränderungen vorzunehmen; ist dies der Fall, so kann in einem zweiten Schritt die Vertrauenswürdigkeit des Datencontainers 10 überprüft werden. Die Berechtigungen können in diesem Falle unterschiedlich ausgestaltet sein: Beispielsweise muss das Bedienpersonal vor Ort nicht berechtigt sein, selbst Datencontainer DC zu erzeugen; es reicht aus, wenn das Bedienpersonal vor Ort einen von einem anderen berechtigten Bediener erzeugten, gültigen Datencontainer DC zur Veränderung des Wurzelzertifikatsspeichers 11 mitbringt.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: technisches Gerät
- 11: Wurzelzertifikatsspeicher
- 12: Prüfeinrichtung
- 20: Datenübertragungsleitung
- 30: Parametriereinrichtung
- 120: Rechner
- 121: Speicher

- App: Angabe / Applikationsangabe
- B: Befehl
- DC: Datencontainer
- KA: Kopfabschnitt
- NA: Nutzlastabschnitt
- OS: öffentlicher Schlüssel
- PM: Prüfprogramm
- PS: privater Schlüssel
- SA: Signaturabschnitt
- SIG(PS(Z)): Signatur
- Tmax: Gültigkeitsangabe
- VDS: Vertrauensdatensatz
- Vw: Verwendungsangabe
- 2: Signaturzertifikat
- Zghk: Zugehörigkeitsangabe
- ZW: Wurzelzertifikat
- ZWB: Basiswurzelzertifikat

## Patentansprüche

1. Verfahren zum Betreiben eines technischen Geräts, das eine streckenseitige oder fahrzeugseitige Komponente einer eisenbahntechnischen Einrichtung ist, wobei das technische Gerät mit einem Zertifikatsspeicher ausgestattet ist,
**dadurch gekennzeichnet, dass** der Zertifikatsspeicher ein Wurzelzertifikatsspeicher ist, in dem als gültig angesehene Wurzelzertifikate gespeichert werden, anhand derer das technische Gerät prüfen kann, ob neu übertragene oder neu installierte Software oder neu empfangene Dateien als vertrauenswürdig einzustufen sind und genutzt bzw. ausgeführt werden dürfen,
wobei zum Verändern des Inhalts des Wurzelzertifikatsspeichers (11) derart vorgegangen wird, dass
- bedienerseitig ein Datencontainer (DC) erzeugt wird, der zumindest Folgendes enthält:
- einen Befehl (B) zum Verändern des Inhalts des Wurzelzertifikatsspeichers (11) sowie im Falle eines Hinzufügens eines neuen Wurzelzertifikats (ZW) zu dem Wurzelzertifikatsspeicher (11) das jeweilige Wurzelzertifikat (ZW),
- ein einen öffentlichen Schlüssel (OS) enthaltendes, bedienerseitiges Signaturzertifikat (Z),
- einen Vertrauenskettendatensatz (VDS), der auf ein Basiswurzelzertifikat (ZWB) verweist und eine Verifizierung des bedienerseitigen Signaturzertifikats (Z) ermöglicht und
- eine mit einem privaten Schlüssel (PS(Z)) des bedienerseitigen Signaturzertifikats (Z) erzeugte Signatur (SIG(PS(Z)),
- geräteseitig die Signatur (SIG(PS(Z)) auf Vertrauenswürdigkeit geprüft wird, und zwar auf der Basis des öffentlichen Schlüssels (OS) im bedienerseitigen Signaturzertifikat (Z), des Vertrauenskettendatensatzes (VDS) und zumindest eines geräteseitig abgespeicherten und geräteseitig als vertrauenswürdig angesehenen Basiswurzelzertifikats (ZWB), und
- im Falle einer die Vertrauenswürdigkeit bestätigenden Signaturprüfung geräteseitig der im Datencontainer (DC) enthaltene Befehl (B) zum Verändern des Inhalts des Wurzelzertifikatsspeichers (11) durchgeführt wird.

2. Verfahren nach Anspruch 1,
**dadurch gekennzeichnet, dass** bedienerseitig ein Datencontainer (DC) erzeugt wird, der außerdem eine oder mehrere der folgenden Angaben enthält:
- eine die zeitliche Gültigkeit des Datencontainers (DC) angebende Gültigkeitsangabe (Tmax),
- eine die Verwendung des neuen Wurzelzertifikats (ZW) im Falle eines Hinzufügens eines neuen Wurzelzertifikats (ZW) angebende Verwendungsangabe (Vw),
- eine die Zugehörigkeit des Datencontainers (DC) zum angesprochenen technischen Gerät (10) angebende Zugehörigkeitsangabe (Zghk) und/oder
- eine Angabe (App) einer oder mehrerer Applikationen des technischen Geräts (10), die im Falle eines Hinzufügens eines neuen Wurzelzertifikats (ZW) das neue Wurzelzertifikat (ZW) nutzen können sollen.

3. Verfahren nach einem der voranstehenden Ansprüche,
**dadurch gekennzeichnet, dass** als Datencontainer (DC) ein Datencontainer (DC) mit einem Kopfabschnitt (KA), einem Nutzlastabschnitt (NA) und einem Signaturabschnitt (SA), der die Signatur (SIG(PS(Z)) enthält, erzeugt wird.

4. Verfahren nach Anspruch 3,
**dadurch gekennzeichnet, dass** der Vertrauenskettendatensatz (VDS) und das bedienerseitige Signaturzertifikat (Z) in dem Kopfabschnitt (KA) untergebracht werden.

5. Verfahren nach einem der voranstehenden Ansprüche 3 bis 4,
**dadurch gekennzeichnet, dass** der Befehl (B) zum Verändern des Inhalts des Wurzelzertifikatsspeichers (11) sowie im Falle eines Hinzufügens eines neuen Wurzelzertifikats (ZW) zu dem Wurzelzertifikatsspeicher (11) das jeweilige Wurzelzertifikat (ZW) in dem Nutzlastabschnitt (NA) untergebracht werden.

6. Verfahren nach einem der voranstehenden Ansprüche 3 bis 5,
**dadurch gekennzeichnet, dass** eine Gültigkeitsangabe (Tmax) und eine Verwendungsangabe (Vw) des Wurzelzertifikats (ZW) im Falle eines Hinzufügens eines neuen Wurzelzertifikats (ZW), eine Zugehörigkeitsangabe (Zghk) zum angesprochenen technischen Gerät (10) und/oder eine Angabe (App) einer oder mehrerer Applikationen des technischen Geräts (10), die im Falle eines Hinzufügens eines neuen Wurzelzertifikats (ZW) das neue Wurzelzertifikat (ZW) nutzen können sollen, in dem Kopfabschnitt (KA) untergebracht werden.

7. Verfahren nach einem der voranstehenden Ansprüche,
**dadurch gekennzeichnet, dass** die Signatur (SIG(PS(Z)) über dem Inhalt des Kopfabschnitts (KA) und des Nutzdatenabschnitts (NA) gebildet wird.

8. Verfahren nach einem der voranstehenden Ansprüche,
**dadurch gekennzeichnet, dass** als Signatur (SIG(PS(Z)) eine Signatur des Typs RFC7515 erzeugt wird.

9. Verfahren nach einem der voranstehenden Ansprüche,
**dadurch gekennzeichnet, dass** als Signatur (SIG(PS(Z)) eine JSON Web Signatur erzeugt wird.

10. Verfahren nach einem der voranstehenden Ansprüche,
**dadurch gekennzeichnet, dass** der Inhalt eines Wurzelzertifikatsspeichers (11) einer der folgenden eisenbahntechnischen Einrichtungen verändert wird: Achszähler, Gleisfreimeldeeinrichtung, Kommunikationseinrichtung, Mobilfunkeinrichtung und/oder Stellwerk.

11. Eisenbahntechnisches Gerät, das eine streckenseitige oder fahrzeugseitige Komponente einer eisenbahntechnischen Einrichtung ist und mit einem Zertifikatsspeicher ausgestattet ist,
**dadurch gekennzeichnet, dass**
- der Zertifikatsspeicher ein Wurzelzertifikatsspeicher ist, in dem als gültig angesehene Wurzelzertifikate gespeichert sind, anhand derer die Komponente prüfen kann, ob neu übertragene oder neu installierte Software oder neu empfangene Dateien als vertrauenswürdig einzustufen sind und genutzt bzw. ausgeführt werden dürfen, und
- die Komponente eine Prüfeinrichtung (12) aufweist, die einen Datencontainer (DC) verarbeiten kann, der zumindest Folgendes enthält:
- einen Befehl (B) zum Verändern des Inhalts des Wurzelzertifikatsspeichers (11) sowie im Falle eines Hinzufügens eines neuen Wurzelzertifikats (ZW) zu dem Wurzelzertifikatsspeicher (11) das jeweilige Wurzelzertifikat (ZW),
- ein einen öffentlichen Schlüssel (OS) enthaltendes, bedienerseitiges Signaturzertifikat (Z),
- einen Vertrauenskettendatensatz (VDS), der auf ein Basiswurzelzertifikat (ZWB) verweist und eine Verifizierung des bedienerseitigen Signaturzertifikats (Z) ermöglicht und
- eine mit einem privaten Schlüssel (PS(Z)) des bedienerseitigen Signaturzertifikats (Z) erzeugte Signatur (SIG(PS(Z)), und
- die Prüfeinrichtung (12) derart ausgestaltet ist, dass sie
- die Signatur (SIG(PS(Z)) auf Vertrauenswürdigkeit prüft, und zwar auf der Basis des öffentlichen Schlüssels (OS) im bedienerseitigen Signaturzertifikat (Z), des Vertrauenskettendatensatzes (VDS) und zumindest eines geräteseitig abgespeicherten und als vertrauenswürdig angesehenen Basiswurzelzertifikats (ZWB) und
- im Falle einer die Vertrauenswürdigkeit bestätigenden Signaturprüfung den im Datencontainer (DC) enthaltenen Befehl (B) zum Verändern des Inhalts des Wurzelzertifikatsspeichers (11) zur Ausführung freigibt oder selbst ausführt.

## Claims

1. Method for operating a technical device that is a trackside or vehicle-side component of a railway technical facility, wherein the technical device is equipped with a certificate store,
**characterised in that**
the certificate store is a root certificate store in which root certificates regarded as valid are stored, with which the technical device can check whether newly transmitted or newly installed software or newly received files are to be classified as trustworthy and may be used or executed,
wherein the procedure for modifying the content of the root certificate store (11) is such that
- a data container (DC) is generated on the operator side and contains at least the following:
- a command (B) for modifying the content of the root certificate store (11) and, in the event of a new root certificate (ZW) being added to the root certificate store (11), the respective root certificate (ZW),
- an operator-side signature certificate (Z) containing a public key (OS),
- a chain-of-trust data record (VDS) that refers to a base root certificate (ZWB) and allows a verification of the operator-side signature certificate (Z), and
- a signature (SIG(PS(Z)) generated with a private key (PS(Z)) of the operator-side signature certificate (Z),
- the trustworthiness of the signature (SIG(PS(Z)) is checked on the device side, namely on the basis of the public key (OS) in the operator-side signature certificate (Z), the chain-of-trust data record (VDS) and at least one base root certificate (ZWB) stored on the device side and regarded as valid on the device side, and
- in the event of a signature check confirming the trustworthiness, the command (B) for modifying the content of the root certificate store (11) contained in the data container (DC) is executed on the device side.

2. Method according to claim 1,
**characterised in that**
a data container (DC) is generated on the operator side and additionally contains one or more of the following indications:
- a validity indication (Tmax) indicating the validity time of the data container (DC),
- a usage indication (Vw) indicating the usage of the new root certificate (ZW) in the event of a new root certificate (ZW) being added,
- an association indication (Zghk) indicating the association of the data container (DC) with the aforementioned technical device (10), and/or
- an indication (App) of one or more applications of the technical device (10) that the new root certificate (ZW) is to be able to use in the event of a new root certificate (ZW) being added.

3. Method according to one of the preceding claims,
**characterised in that**
a data container (DC), having a header section (KA), a payload section (NA) and a signature section (SA) containing the signature (SIG(PS(Z)), is generated as the data container (DC) .

4. Method according to claim 3,
**characterised in that**
the chain-of-trust data record (VDS) and the operator-side signature certificate (Z) are placed in the header section (KA).

5. Method according to one of the preceding claims 3 to 4,
**characterised in that**
the command (B) for modifying the content of the root certificate store (11) and, in the event of a new root certificate (ZW) being added to the root certificate store (11), the respective root certificate (ZW), are placed in the payload section (NA).

6. Method according to one of the preceding claims 3 to 5,
**characterised in that**
a validity indication (Tmax) and a usage indication (Vw) of the root certificate (ZW) in the event of a new root certificate (ZW) being added, an association indication (Zghk) with the aforementioned technical device (10) and/or an indication (App) of one or more applications of the technical device (10) that the new root certificate (ZW) is to be able to use in the event of a new root certificate (ZW) being added, are placed in the header section (KA).

7. Method according to one of the preceding claims,
**characterised in that**
the signature (SIG(PS(Z)) is formed using the content of the header section (KA) and the payload section (NA).

8. Method according to one of the preceding claims,
**characterised in that**
a signature of the type RFC7515 is generated as the signature (SIG(PS(Z)).

9. Method according to one of the preceding claims,
**characterised in that**
a JSON Web Signature is generated as the signature (SIG(PS(Z)).

10. Method according to one of the preceding claims,
**characterised in that**
the content of a root certificate store (11) of one of the following railway technical facilities is modified: axle counter, track vacancy detection facility, communication facility, mobile radio facility and/or interlocking.

11. Railway technical device that is a trackside or vehicle-side component of a railway technical facility and is equipped with a certificate store,
**characterised in that**
- the certificate store is a root certificate store in which root certificates regarded as valid are stored, with which the component can check whether newly transmitted or newly installed software or newly received files are to be classified as trustworthy and may be used or executed, and
- the component has a checking facility (12) that can work with a data container (DC) that contains at least the following:
- a command (B) for modifying the content of the root certificate store (11) and, in the event of a new root certificate (ZW) being added to the root certificate store (11), the respective root certificate (ZW),
- an operator-side signature certificate (Z) containing a public key (OS),
- a chain-of-trust data record (VDS) that refers to a base root certificate (ZWB) and allows a verification of the operator-side signature certificate (Z), and
- a signature (SIG(PS(Z)) generated with a private key (PS(Z)) of the operator-side signature certificate (Z), and
- the checking facility (12) is configured such that it
- checks the trustworthiness of the signature (SIG(PS(Z)), namely on the basis of the public key (OS) in the operator-side signature certificate (Z), the chain-of-trust data record (VDS) and at least one base root certificate (ZWB) stored on the device side and regarded as valid, and
- in the event of a signature check confirming the trustworthiness, allows the execution of, or itself executes, the command (B) for modifying the content of the root certificate store (11) contained in the data container (DC).

## Revendications

1. Procédé pour faire fonctionner un appareil technique, qui est un composant sur la voie ou embarqué d'un dispositif de la technique ferroviaire, dans lequel l'appareil technique est équipé d'une mémoire de certificat,
**caractérisé en ce que**
la mémoire de certificat est une mémoire de certificat de racine, dans laquelle on met en mémoire des certificats de racine considérés comme valables, à l'aide desquels l'appareil technique peut contrôler si des logiciels transmis nouvellement ou installés nouvellement ou des fichiers reçus nouvellement peuvent être classés comme dignes de confiance et peuvent être utilisés ou exécutés,
dans lequel pour modifier le contenu de la mémoire (11) de certificat de racine, on procède de manière à
- produire du côté de l'opérateur un conteneur (DC) de données, qui contient au moins ce qui suit :
- une instruction (B) de modification du contenu de la mémoire (11) de certificat de racine ainsi que, dans le cas d'un ajout d'un nouveau certificat (ZW) de racine à la mémoire (11) de certificat de racine, le certificat (ZW) de racine respectif,
- un certificat (Z) de signature du côté de l'opérateur, contenant une clé (OS) publique,
- un ensemble (VDS) de données de chaînes de confiance, qui renvoie à un certificat (ZWB) de racine de base et rend possible une vérification du certificat (Z) de signature du côté de l'opérateur et
- une signature (SIG(PS(Z)) produite par une clé (PS(Z)) privée du certificat (Z) de signature du côté de l'opérateur,
- on contrôle du côté de l'appareil que la signature (SIG(PS(Z)) est digne de confiance, et cela sur la base de la clé (OS) publique dans le certificat (Z) de signature du côté de l'opérateur, de l'ensemble (VDS) de données de chaînes de confiance et d'au moins un certificat (ZWB) de racine de base mis en mémoire du côté de l'appareil et considéré comme digne de confiance, et
- dans le cas d'un contrôle de signature confirmant que la signature est digne de confiance, on exécute du côté de l'appareil l'instruction (B) contenue dans le conteneur (DC) de données pour modifier le contenu de la mémoire (11) de certificat de racine.

2. Procédé suivant la revendication 1,
**caractérisé en ce que** l'
on produit du côté de l'opérateur un conteneur (DC) de données, qui contient en outre une ou plusieurs des indications suivantes :
- une indication (Tmax) de validité indiquant la validité dans le temps du conteneur (DC) de données,
- une indication (Vw) d'utilisation indiquant l'utilisation du nouveau certificat (ZW) de racine dans le cas d'un ajout d'un nouveau certificat (ZW) de racine,
- une indication (Zghk) d'appartenance indiquant l'appartenance du conteneur (DC) de données à l'appareil (10) technique envisagé et/ou
- une indication (App) d'une ou de plusieurs applications de l'appareil (10) technique, qui doit pouvoir utiliser le nouveau certificat (ZW) de racine dans le cas d'un ajout d'un nouveau certificat (ZW) de racine.

3. Procédé suivant l'une des revendications précédentes,
**caractérisé en ce que** l'
on produit comme conteneur (DC) de données un conteneur (DC) de données ayant une partie (KA) d'entête, une partie (NA) de charge utile et une partie (SA) de signature, qui contient la signature (SIG(PS(Z)).

4. Procédé suivant la revendication 3,
**caractérisé en ce que** l'
on met dans la partie (KA) d'entête l'ensemble (VDS) de données de chaînes de confiance et le certificat (Z) de signature du côté de l'opérateur.

5. Procédé suivant l'une des revendications 3 à 4 précédentes,
**caractérisé en ce que** l'
on met dans la partie (NA) de charge utile l'instruction (B) de modification du contenu de la mémoire (11) de certificat de racine ainsi que, dans le cas d'un ajout d'un nouveau certificat (ZW) de racine à la mémoire (11) de certificat de racine, le certificat (ZW) de racine respectif.

6. Procédé suivant l'une des revendications 3 à 5 précédentes,
**caractérisé en ce que** l'
on met dans la partie (KA) d'entête une indication (Tmax) de validité et une indication (Vw) d'utilisation du certificat (ZW) de racine dans le cas d'un ajout d'un nouveau certificat (ZW) de racine, une indication (Zghk) d'appartenance à l'appareil (10) technique envisagé et/ou une indication (App) d'une ou de plusieurs applications de l'appareil (10) technique, qui doivent pouvoir utiliser, dans le cas d'un ajout d'un nouveau certificat (ZW) de racine, le nouveau certificat (ZW) de racine.

7. Procédé suivant l'une des revendications précédentes,
**caractérisé en ce que** l'
on forme la signature (SIG(PS(Z)) par le contenu de la partie (KA) d'entête et de la partie (NA) de données utiles.

8. Procédé suivant l'une des revendications précédentes,
**caractérisé en ce que** l'
on produit comme signature (SIG(PS(Z)) une signature du type RFC7515.

9. Procédé suivant l'une des revendications précédentes,
**caractérisé en ce que** l'
on produit comme signature (SIG(PS(Z)) une signature JSON web.

10. Procédé suivant l'une des revendications précédentes,
**caractérisé en ce que** l'
on modifie le contenu d'une mémoire (11) de certificat de racine de l'un des dispositifs de la technique ferroviaire suivante :
compteur d'essieux, dispositif de contrôle de libération de voie, dispositif de communication, dispositif de téléphonie mobile et/ou poste d'aiguillage.

11. Appareil de la technique ferroviaire, qui est un composant sur la voie ou embarqué d'un dispositif de la technique ferroviaire et qui est équipé d'une mémoire de certificat,
**caractérisé en ce que**
- la mémoire de certificat est une mémoire de certificat de racine, dans laquelle on met en mémoire des certificats de racine considérés comme valables, à l'aide desquels l'appareil technique peut contrôler si des logiciels transmis nouvellement ou installés nouvellement ou des fichiers reçus nouvellement peuvent être classés comme dignes de confiance et peuvent être utilisés ou exécutés, et
- le composant a un dispositif (12) de contrôle, qui peut traiter un conteneur (DC) de données, qui contient au moins ce qui suit :
- une instruction (B) de modification du contenu de la mémoire (11) de certificat de racine ainsi que, dans le cas d'un ajout d'un nouveau certificat (ZW) de racine à la mémoire (11) de certificat de racine, le certificat (ZW) de racine respectif,
- un certificat (Z) de signature du côté de l'opérateur, contenant une clé (OS) publique,
- un ensemble (VDS) de données de chaînes de confiance, qui renvoie à un certificat (ZWB) de racine de base et rend possible une vérification du certificat (Z) de signature du côté de l'opérateur et
- une signature (SIG(PS(Z)) produite par une clé (PS(Z)) privée du certificat (Z) de signature du côté de l'opérateur, et
- le dispositif (12) de contrôle est conformé, de manière
- à contrôler que la signature (SIG(PS(Z)) est digne de confiance et cela sur la base de la clé (OS) publique dans le certificat (Z) de signature du côté de l'opérateur, de l'ensemble (VDS) de données de chaînes de confiance et d'au moins un certificat (ZWB) de racine de base mis en mémoire du côté de l'appareil et considéré comme digne de confiance, et
- dans le cas d'un contrôle de signature confirmant qu'elle est digne de confiance, il valide ou exécute soi-même l'instruction (B) contenue dans le conteneur (DC) de données pour modifier le contenu de la mémoire (11) de certificat de racine.
